# EUROPEAN PATENT SPECIFICATION

(11) **EP 3 616 572 B1**
(45) Date of publication and mention of the grant of the patent: **26.05.2021**
(21) Application number: 17908858.8
(22) Date of filing: 10.11.2017
(51) Int. Cl.: A47J 27/00, A47J 36/32

(54) **COOKING APPLIANCE**
KOCHGERÄT
APPAREIL DE CUISSON

(30) Priority: 12.05.2017 CN 201720525739 U; 12.05.2017 CN 201720525771 U
(43) Date of publication of application: 04.03.2020
(73) Proprietor: Foshan Shunde Midea Electrical Heating Appliances Manufacturing Co., Limited, Foshan, Guangdong 528311 (CN)
(72) Inventor: MO, Rongkang, Foshan Guangdong 528311 (CN); YANG, Xingguo, Foshan Guangdong 528311 (CN); XIAO, Zhiwei, Foshan Guangdong 528311 (CN)
(74) Representative: RGTH
(86) International application number: PCT/CN2017/110482
(87) International publication number: WO 2018/205529

(56) References cited:
- CN-A- 1 533 733
- CN-A- 106 235 877
- CN-U- 201 727 371
- CN-U- 201 806 510
- CN-U- 205 267 814
- CN-U- 205 658 761
- JP-A- H01 166 718
- JP-A- 2009 066 094
- US-A1- 2007 210 062
- US-A1- 2008 083 730
- US-A1- 2012 048 843

## Description

### FIELD

The present invention relates to the technical field of kitchen appliances, and particularly relates to a cooking appliance.

### BACKGROUND

To meet the demands of accurate temperature control in low-temperature cooking outside China, an existing product is equipped with a separate temperature sensor which can be placed in an inner pot during cooking to directly monitor the temperature of food in the inner pot. The temperature sensor is interconnected with the product through Bluetooth transmission and transmits a temperature signal to the product, and the product performs heating under the control of a control system in the product, so that the temperature inside the pot is accurately controlled within a preset range, achieving the purpose of accurate temperature control. However, this solution requires use of Bluetooth devices, which brings high cost; and Bluetooth devices need to be paired one by one in production, and the production efficiency is largely influenced. The temperature sensor can also be directly connected with the product via a wire for signal transmission, but in this solution, as the temperature sensor is directly connected with the electric circuit of the product, it is difficult to achieve complete electric isolation, causing electric safety risks. Documents US 2007/210062 A1 and CN 201 727 371 U show cooking appliances according to the preamble of claim 1.

### SUMMARY

The present invention is intended to solve at least one of the technical problems existing in the prior art.

To this end, an object of the present invention is to provide a cooking appliance.

In order to achieve the above object, according to an embodiment of the present invention, there is provided a cooking appliance, comprising a pot body, an inner pot disposed in the pot body and an upper cover covering the pot body, the cooking appliance further comprises: a main control device disposed on one of the pot body and the upper cover; a communication device comprising a first sensing device and a second sensing device which are correspondingly disposed, the first sensing device being disposed on the one of the pot body and the upper cover, and being electrically connected to the main control device, the first sensing device comprising a first coil, the second sensing device being disposed on the pot body or on the upper cover, the second sensing device comprising a second coil, and the second coil being capable of coupling with the first coil; and a temperature sensor which is electrically connected to the second sensing device via a first wire, and can be placed in the inner pot.

The cooking appliance provided by the above embodiment of the present invention comprises the external temperature sensor which can be moved via the first wire and the communication device for transmitting signals for the temperature sensor, the communication device comprises the first sensing device and the second sensing device, the first sensing device is electrically connected to the main control device, i.e., the first sensing device is electrically connected with a control circuit of the cooking appliance, the second sensing device is electrically connected to the temperature sensor, the first sensing device comprises the first coil, the second sensing device comprises the second coil, and the first sensing device and the second sensing device are correspondingly disposed, so that the first coil and the second coil can be coupled. During cooking, especially during low-temperature cooking (the temperature of cooking is less than or equal to 100°C), the temperature sensor is placed in the inner pot to measure the temperature of food in the inner pot and transmits the detected temperature signal to the main control device, then wireless signal transmission is achieved through a coupling action of the first sensing device and the second sensing device, so that the main control device receives the temperature signal transmitted by the temperature sensor, the main control device is electrically connected with a heating component of the cooking appliance, and according to the received temperature signal, the main control device 10 controls the heating component9 to work according to a preset program, so that accurate temperature control of food in the inner pot during cooking is achieved, providing low cost and good manufacturability, and the temperature sensor is completely isolated from the electric control circuit of the product, providing high safety. The problems in the related art that the use of Bluetooth devices brings high costs and direct connection of the temperature sensor with the electric circuit of the product causes safety risks are solved.

Whether the main control device and the first sensing device are mounted on the pot body or on the upper cover may be determined according to the position of a power supply device of the cooking appliance, specifically, when the power supply device is mounted on the pot body, the main control device and the first sensing device are also mounted on the pot body, and when the power supply device is mounted on the upper cover, the main control device and the first sensing device are also mounted on the upper cover. The second sensing device may be disposed either on the pot body or on the upper cover, only if the first coil is capable of coupling with the second coil.

In addition, the cooking appliance provided by the above embodiment of the present invention can also have the following additional technical features:

Preferably, the second sensing device further comprises a processing circuit which is electrically connected to the temperature sensor, and the processing circuit of the second sensing device is powered by a coupling action of the first sensing device and the second sensing device.

In the above technical solution, preferably, the first coil at least partially covers the second coil, and the distance between the first coil and the second coil is less than or equal to 15 mm.

The first coil and the second coil are close to each other or directly contact each other, and the first coil and the second coil are completely overlapped or partially overlapped and the distance between the first coil and the second coil is less than or equal to 15 mm, so that the first coil and the second coil can be effectively coupled. Preferably, the first coil and the second coil are both correspondingly mounted along a direction perpendicular to a horizontal plane, i.e. the first coil and the second coil are both disposed along a vertical plane. Or, the first coil and the second coil are both disposed along a horizontal plane and are in up-down arrangement, and of course, it is also possible that the first coil and the second coil are disposed along other directions.

Preferably, the first coil and the second coil are arranged in planar shapes, and of course, it is also possible that the first coil and the second coil are arranged in other shapes such as cylindrical shapes. The first coil and the second coil may be in circular shapes or non-circular shapes such as square shapes. Preferably, the first coil and the second coil are in planar ring shapes.

Preferably, the first sensing device comprises a plurality of first coils and the second sensing device comprises a plurality of second coils to further improve the coupling effect of the first sensing device and the second sensing device.

In the above technical solution, preferably, the first sensing device further comprises a first magnetic conductive plate, and the first coil is disposed on the first magnetic conductive plate; and/or the second sensing device further comprises a second magnetic conductive plate, and the second coil is disposed on the second magnetic conductive plate.

By providing the first magnetic conductive plate and/or the second magnetic conductive plate, the coupling effect of the first coil and the second coil can be further enhanced. In practical application, the number of winding turns of the first coil and the second coil, the distance between the first coil and the second coil and the like may be specifically set to enable the first coil and the second coil to be effectively coupled.

In the above technical solution, preferably, the upper cover is provided with a through hole for the temperature sensor to pass through, and the upper cover is provided with a limiting mating part, the temperature sensor is provided with a limiting part, the limiting part mates with the limiting mating part to limit the temperature sensor within the through hole.

In order to enable the temperature sensor to measure the temperature of food in the inner pot, the upper cover is provided with the through hole, and after the temperature sensor is inserted into the through hole, the limiting part mates with the limiting mating part to limit the temperature sensor on the upper cover.

In the technical solution, preferably, the temperature sensor comprises a connecting part and a testing part connected to each other, the connecting part is connected to the first wire, the testing part is internally provided with a temperature sensing part, the cross-sectional area of the connecting part is larger than the cross-sectional area of the testing part, the limiting part is a limiting step formed at a joint of the connecting part with the testing part, the cross-sectional area of the through hole is larger than or equal to the cross-sectional area of the testing part and smaller than the cross-sectional area of the connecting part, the limiting mating part is a part on the upper surface of the upper cover close to the through hole, and the testing part is inserted into the through hole such that the limiting step abuts against the upper surface of the upper cover; or the limiting part is an external thread disposed on the temperature sensor, and the limiting mating part is an internal thread disposed on an inner wall of the through hole such that the temperature sensor and the through hole are threadingly connected; or the limiting part is a first snap joint disposed on the temperature sensor, the limiting mating part is a second snap joint disposed on the upper cover, and the temperature sensor is inserted into the through hole such that the first snap joint mates with the second snap joint to snap the temperature sensor onto the upper cover.

The temperature sensor comprises the connecting part and the testing part which is disposed below the connecting part and connected to the connecting part, and the testing part is internally provided with the temperature sensing part, thereby achieving temperature measurement of food in the inner pot. The connecting part has a cross-sectional area larger than that of the testing part, so that a limiting step is formed at the joint of the connecting part and the testing part, and as the through hole has a cross-sectional area larger than or equal to that of the testing part and smaller than that of the connecting part, after the testing part is inserted into the through hole, the limiting step abuts against the upper surface of the upper cover.

Or, the inner wall of the through hole is provided with the internal thread, the temperature sensor is provided with the external thread matching with the internal thread, and after the temperature sensor is inserted into the through hole, the internal thread mates with the external thread to position the temperature sensor on the upper cover.

Or, the temperature sensor is provided with the first snap joint, the upper cover is provided with the second snap joint, and after the temperature sensor is inserted into the through hole, the first snap joint mates with the second snap joint to position the temperature sensor on the upper cover.

Preferably, a sealing ring for sealing the temperature sensor and the inner wall of the through hole is disposed in the through hole.

In the above technical solution, preferably, the main control device and the first sensing device are disposed on a circuit board of the cooking appliance; or the main control device is electrically connected to the first sensing device via a second wire.

The main control device and the first sensing device are on the same circuit board, so that the main control device is electrically connected to the first sensing device; or the main control device is electrically connected to the first sensing device via the second wire. Preferably, the first sensing device is placed in the interior of the pot body (including the interior of the control box) and is connected to the main control device of the product via an electric circuit.

In the above technical solution, preferably, the first sensing device is disposed inside the one of the pot body and the upper cover, and the second sensing device is disposed inside or outside the pot body or the upper cover.

The first sensing device is disposed inside the one of the pot body and the upper cover, so that the appearance of the cooking appliance is even not influenced by the first sensing device while the safety in use of the cooking appliance is improved. Of course, it is also possible that the first sensing device is disposed outside the cooking appliance, and preferably, the first sensing device is covered with a housing.

In the above technical solution, preferably, the second sensing device is covered with a shield, and the second sensing device is connected to the pot body or the upper cover via the shield.

The second sensing device is covered with the shield, and the shield is connected to the pot body or the upper cover, so that the second sensing device is mounted on the pot body or the upper cover via the shield. The second sensing device is connected with the shield, so that the second sensing device can be disposed on the pot body or the upper cover as an independent accessory, which makes minor modifications to the structure of the pot body or the upper cover, and makes the second sensing device convenient to mount and/or detach.

Preferably, the shield is a plastic component so as to prevent shielding caused by covering the second sensing device with the shield, and of course, it is also possible that the shield is a metal component, preferably, a gap may be formed in the metal component to enhance the coupling effect of the first sensing device and the second sensing device.

Preferably, the shield comprises the second sensing device, and the shield is provided with a wire outlet for the first wire to go out.

In the above technical solution, preferably, the shield is provided with a mounting structure, and the pot body or the upper cover is provided with a mounting mating structure, the mounting structure mates with the mounting mating structure to connect the shield to the pot body or the upper cover.

When the shield is mounted on the pot body, the shield and the pot body may be either fixedly connected or detachably connected. When the shield is mounted on the upper cover, the shield and the upper cover may be either fixedly connected or detachably connected.

In the above technical solution, preferably, the mounting structure is a third snap joint disposed on the shield, and the mounting mating structure is a fourth snap joint disposed on the pot body or the upper cover and matching with the third snap joint such that snap the shield onto the pot body or the upper cover; or the mounting structure is a first screw hole disposed on the shield, and the mounting mating structure is a second screw hole disposed on the pot body or the upper cover and matching with the first screw hole such that the shield is connected to the pot body or the upper cover by screws; or the mounting structure is a first hook disposed on the shield, and the mounting mating structure is a first hanging hole disposed on the pot body or the upper cover and matching with the first hook; or the mounting structure is a first hanging hole disposed on the shield, and the mounting mating structure is a first hook disposed on the pot body or the upper cover and matching with the first hanging hole; or the mounting structure is a first attraction piece disposed on the shield, and the mounting mating structure is a second attraction piece disposed on the pot body or the upper cover and capable of magnetically attracting the first attraction piece such that the shield is attached to the pot body or the upper cover through attraction between the first attraction piece and the second attraction piece; or the mounting structure is a sliding rail disposed on the shield, the mounting mating structure is a sliding groove disposed on the pot body or the upper cover and capable of matching with the sliding rail, and the sliding rail is positioned in the sliding groove; or the mounting structure is a sliding groove disposed on the shield, the mounting mating structure is a sliding rail disposed on the pot body or the upper cover and capable of matching with the sliding groove, and the sliding rail is positioned in the sliding groove; or the mounting structure is a rotating shaft disposed on the shield, and the mounting mating structure is a shaft hole disposed in the pot body or the upper cover and matching with the rotating shaft such that the shield is rotatably connected to the pot body or the upper cover; or the mounting structure is a shaft hole disposed in the shield, and the mounting mating structure is a rotating shaft disposed on the pot body or the upper cover and capable of matching with the shaft hole such that the shield is rotatably connected to the pot body or the upper cover.

The shield is provided with the third snap joint, and the pot body is provided with the fourth snap joint matching with the third snap joint. Specifically, the third snap joint is a snap-on piece toward the pot body, and the fourth snap joint is a rib, a step or a hole disposed on the pot body, or the fourth snap joint is a snap-on piece toward the shield, and the third snap joint is a rib, a step or a hole disposed on the shield.

Or, the shield is provided with the first screw hole, the pot body is provided with a screw column corresponding to the first screw hole, and the screw column is provided with the second screw hole such that a screw passes through the first screw hole and the second screw hole to connect the shield and the pot body.

Or, the shield is provided with the first hook, and the pot body is provided with the first hanging hole, or the shield is provided with the first hanging hole, and the pot body is provided with the first hook, such that the first hook mates with the first hanging hole to mount the shield onto the pot body.

Or, the shield is provided with the first attraction piece, the pot body is provided with the second attraction piece capable of magnetically attracting the first attraction piece, and one of the first attraction piece and the second attraction piece is a magnet, while the other one is a magnet, a magnetic metal or a permanent magnet. The shield is provided in advance with a shield limiting hole matching with the first attraction piece, and the first attraction piece is limited within the shield limiting hole, or the first attraction piece is fixed to the shield by means of insert-molding process. As for the manner in which the second attraction piece is connected, the pot body is provided in advance with a pot body limiting hole matching with the second attraction piece, and the second attraction piece is limited within the pot body limiting hole, or the second attraction piece is fixed to the pot body by means of insert-molding process.

Or, the shield is provided with the sliding rail, the pot body is provided with the sliding groove matching with the sliding rail, and preferably, the sliding groove is disposed on the outer surface of the pot body; or the shield is provided with the sliding groove, the pot body is provided with the sliding rail matching with the sliding groove, and preferably, the sliding rail is disposed on the outer surface of the pot body.

Or, the shield and the pot body can be rotatably connected. Specifically, the shield is provided with the rotating shaft, the pot body is provided with the shaft hole, and the rotating shaft is inserted into the shaft hole, or the shield is provided with the shaft hole, the pot body is provided with the rotating shaft, or the shield is provided with the first shaft hole, the pot body is provided with the second shaft hole, and the rotating shaft passes through the first shaft hole and the second shaft hole such that the shield is rotatably connected to the pot body.

The manner in which the shield and the pot body are connected is illustrated by the example that the shield is mounted on the pot body, however, it is also possible that the shield is connected to the upper cover, and then the mounting mating structure is disposed on the upper cover.

In the above technical solution, preferably, the shield is adhered to the pot body or the upper cover; or the pot body or the upper cover is provided with a limiting hole with an open end, and the shield covers the open end of the limiting hole and is limited within the limiting hole.

Besides the above-mentioned manner in which the shield and the pot body or the upper cover are connected, it is also possible that the shield and the pot body or the upper cover are connected by an adhesive. Or, a limiting hole with a first open end is formed in the pot body or the upper cover, preferably, the limiting hole opens outwards, and the shield covers the open end of the limiting hole and is limited within the limiting hole.

In the above technical solution, preferably, the shield is provided with a mounting hole, and the second sensing device is positioned in the mounting hole; or the second sensing device is fixed to the shield by means of insert-molding process; or the second sensing device is bonded to the shield.

As for the manner in which the shield and the second sensing device are connected, the shield may be provided in advance with a mounting hole for mounting the second sensing device. The shield may be of integral structure, or the shield may comprise a first shield and a second shield, the first shield and the second shield are positioned on two sides of the second sensing device, respectively, and a mounting hole for mounting the second sensing device is formed after the first shield and the second shield are spliced. Preferably, the first shield is disposed on one side of the second sensing device close to the pot body or the upper cover on which the second sensing device is mounted, the second shield and the first shield are connected by snap-fit, fasteners and the like, the first shield is connected to the pot body or the upper cover on which the second sensing device is mounted, and of course, it is also possible that the second shield is connected to the pot body or the upper cover.

It is also possible that the second sensing device and the shield are formed by means of insert-molding process.

In the above technical solution, preferably, the one of the pot body and the upper cover comprises a body and a housing sleeving on the body, the first sensing device is positioned in the housing, and the housing is provided with a gap at a position corresponding to the first sensing device, wherein the housing is a metal housing.

The pot body comprises the metal housing, and when the first sensing device is positioned in the housing, the housing is provided with the gap at a position corresponding to the first sensing device to prevent shielding caused by the metal housing so as to ensure the coupling effect of the first sensing device and the second sensing device. When the first sensing device is positioned inside the upper cover, the housing of the upper cover is provided with the gap at a position corresponding to the first sensing device. Of course, when the housing is a plastic housing, the plastic housing may also be provided with a gap at a position corresponding to the first sensing device.

In the above technical solution, preferably, the one of the pot body and the upper cover is provided with a mounting recess with an open end, and the first sensing device and the second sensing device are positioned in the mounting recess.

One of the pot body and the upper cover is provided with the mounting recess with an open end, preferably, the mounting recess opens outwards, and the first sensing device and the second sensing device are positioned in the mounting recess such that the first sensing device and the second sensing device are both positioned inside the pot body or the upper cover.

Of course, it is also possible that the second sensing device is mounted outside the pot body or the upper cover, for example, the second sensing device is covered with a shield, and the second sensing device is connected to the pot body or the upper cover via the shield.

In the above technical solution, preferably, the main control device is positioned in the mounting recess, the cooking appliance further comprises a control box, and the control box covers the open end of the mounting recess; and the control box is provided with a wire outlet for the first wire to go out.

After the second sensing device is mounted in the mounting recess, the open end of the mounting recess is covered with the control box, and one end, connected to the temperature sensor, of the first wire protrudes out through the wire outlet, so that the temperature sensor can be externally arranged.

In the above technical solution, preferably, the pot body or the upper cover is provided with a mounting part, and the temperature sensor is provided with a mounting mating part mating with the mounting part such that the temperature sensor can be placed on the pot body or the upper cover.

When the temperature sensor is not in-use, the temperature sensor may be removed from the inner pot. In order to facilitate storage of the temperature sensor in a non-working state, the pot body may be provided with the mounting part, while the temperature sensor is provided with the mounting mating part, and the mounting part mates with the mounting mating part such that the temperature sensor can be placed on the pot body. Of course, it is also possible that the upper cover is provided with the mounting part such that the temperature sensor in the non-working state can be placed on the upper cover.

In the above technical solution, preferably, the mounting part is a snap-in groove disposed on the pot body or the upper cover, and the temperature sensor can snap onto the snap-in groove; or the mounting part is a second hook disposed on the pot body or the upper cover, and the mounting mating part is a second hanging hole disposed on the temperature sensor and matching with the second hook; or the mounting part is a second hanging hole disposed on the pot body or the upper cover, and the mounting mating part is a second hook disposed on the temperature sensor and matching with the second hanging hole.

The pot body or the upper cover is provided with the snap-in groove, and the temperature sensor in the non-working state can be snap-fit into the snap-in groove, preferably, the snap-in groove is disposed on the outer surface of the pot body or the outer surface of the upper cover, while mounting mating part is a part of the temperature sensor, and the part is snap-fit into the snap-in groove, or the mounting mating part is a snap-on piece disposed on the temperature sensor and matching with the snap-in groove. Of course, it is also possible that the pot body or the upper cover is provided with the snap-on piece, and the temperature sensor is provided with the snap-in groove.

Or, the pot body or the upper cover is provided with the second hook, the temperature sensor is provided with the second hanging hole, and the temperature sensor in the non-working state is stored on the pot body or the upper cover through the mating of the second hook and the second hanging hole. Or, the pot body or the upper cover is provided with the second hanging hole, the temperature sensor is provided with the second hook, and the temperature sensor in the non-working state is stored on the pot body or the upper cover through the mating of the second hook and the second hanging hole.

Preferably, the cooking appliance further comprises a first temperature sensor, and the first temperature sensor is disposed on the pot body or the upper cover, and for connected products, such as an electric rice cooker, it is also possible that both the pot body and the upper cover are internally provided with first temperature sensors for detecting working temperature of cooking of routine functions. Preferably, when the main control device is mounted on the pot body, the first temperature sensor is mounted on the pot body, and when the main control device is mounted on the upper cover, the first temperature sensor is mounted on the upper cover. The main control device receives detection data of the first temperature sensor and performs processing, and controls the heating component to work according to a preset program. Preferably, the first temperature sensor is positioned below the inner pot and used for detecting the temperature at the bottom of the inner pot, and when the temperature sensor works, the first temperature sensor mainly provides a protective function, preventing the inner pot from boiling without water and the like.

Preferably, when the second sensing device is disposed on the upper cover, the upper cover is provided with a display screen, and the display screen is electrically connected to the second sensing device to display temperature parameters inside the inner pot detected by the temperature sensor. The upper cover is also provided with an operation part, and the operation part is electrically connected to the second sensing device such that operation instructions can be input by the operation part.

The cooking appliance includes an electric pressure cooker, an electric rice cooker, etc.

Additional aspects and advantages of the present invention will become apparent in the following description, or are understood by the practice of the present invention.

### BRIEF DESCRIPTION OF THE DRAWINGS

The above and/or additional aspects and advantages of the present invention will become apparent and readily understood from the following descriptions of embodiments in combination with the drawings, in which:
Fig. 1 is an exploded structural schematic view of a cooking appliance according to Embodiment 1 of the present invention;
Fig. 2 is a partially exploded structural schematic view of the cooking appliance according to Embodiment 1 of the present invention;
Fig. 3 is a partially structural schematic view of the cooking appliance according to Embodiment 1 of the present invention;
Fig. 4 is a structural schematic view of assembly of a first sensing device, a second sensing device, a main control device and a temperature sensor according to one embodiment of the present invention;
Fig. 5 is an exploded structural schematic view of the cooking appliance according to Embodiment 1 of the present invention;
Fig. 6 is an exploded structural schematic view of a cooking appliance according to Embodiment 3 of the present invention;
Fig. 7 is an exploded structural schematic view of a cooking appliance according to Embodiment 2 of the present invention;
Fig. 8 is an exploded structural schematic view of a cooking appliance according to Embodiment 4 of the present invention;
Fig. 9 is an exploded structural schematic view of a cooking appliance according to Embodiment 5 of the present invention;
Fig. 10 is an exploded structural schematic view of a cooking appliance according to Embodiment 6 of the present invention; and
Fig. 11 is an assembly structural schematic view of a cooking appliance according to one embodiment of the present invention.

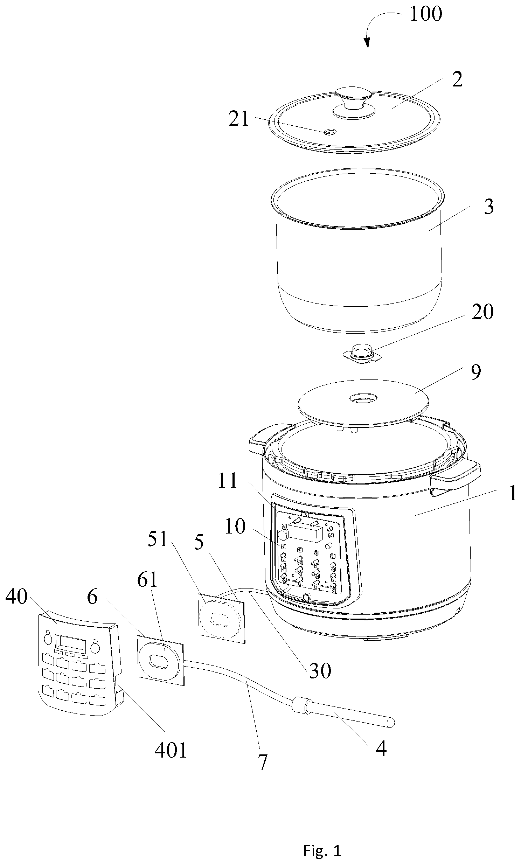

The corresponding relationship between the reference signs and component names in Figs. 1 to 11 are as follows:

100 cooking appliance, 1 pot body, 11 mounting recess, 12 snap-in groove, 13 snap-on piece, 14 second screw hole, 15 screw column, 16 first hook, 17 second attraction piece, 18 sliding groove, 19 gap, 2 upper cover, 21 through hole, 3 inner pot, 4 temperature sensor, 41 connecting part, 42 testing part, 43 limiting step, 5 first sensing device, 51 first coil, 6 second sensing device, 61 second coil, 7 first wire, 8 shield, 81 first shield, 82 second shield, 83 hole, 84 first screw hole, 85 first hanging hole, 86 first attraction piece, 87 sliding rail, 9 heating component, 10 main control device, 20 first temperature sensor, 30 second wire, 40 control box, 401 wire outlet, 50 screw.

### DETAILED DESCRIPTION

In order that the above-mentioned objectives, features and advantages of the present invention can be understood more clearly, a further detailed description of the present invention will be given below in connection with the accompanying drawings and specific embodiments. It should be noted that the embodiments of the present invention and the features in the embodiments can be combined with each other if there is no conflict.

In the following description, numerous specific details are set forth in order to provide a thorough understanding of the present invention. However, the present invention can also be implemented in other manners different from those described herein. Therefore, the protection scope of the present invention is not limited to the specific embodiments disclosed below, but is defined by the appended claims.

A cooking appliance according to some embodiments of the present invention will now be described with reference to Figs. 1 to 11.

As shown in Fig. 1, according to some embodiments of the present invention, there is provided a cooking appliance 100, comprising a pot body 1, an inner pot 3 disposed in the pot body 1, an upper cover 2 covering the pot body 1, a main control device 10, a temperature sensor 4 and a communication device. The main control device 10 is disposed on one of the pot body 1 and the upper cover 2; the communication device comprises a first sensing device 5 and a second sensing device 6 which are correspondingly disposed, the first sensing device 5 is disposed on one of the pot body 1 and the upper cover 2, and is electrically connected to the main control device 10, the first sensing device 5 comprises a first coil 51, the second sensing device 6 is disposed on the pot body 1 or on the upper cover 2, the second sensing device 6 comprises a second coil 61, and the second coil 61 is capable of coupling with the first coil 51; and the temperature sensor 4 is electrically connected to the second sensing device 6 via a first wire 7, and can be placed in the inner pot 3.

The cooking appliance 100 provided by the above embodiment of the present invention comprises the external temperature sensor 4 which can be moved via the first wire 7 and the communication device for transmitting signals for the temperature sensor 4, the communication device comprises the first sensing device 5 and the second sensing device 6, the first sensing device 5 is electrically connected to the main control device 10, i.e., the first sensing device 5 is electrically connected to a control circuit of the cooking appliance 100, the second sensing device 6 is electrically connected to the temperature sensor 4, the first sensing device comprises the first coil 51, the second sensing device 6 comprises the second coil 61, and the first sensing device 5 and the second sensing device 6 are correspondingly disposed, so that the first coil 51 and the second coil 61 can be coupled. During cooking, especially during low-temperature cooking (the temperature of cooking is less than or equal to 100°C), the temperature sensor 4 is placed in the inner pot 3 to measure the temperature of food in the inner pot 3and transmits the detected temperature signal to the main control device 10, then wireless signal transmission is achieved through a coupling action of the first sensing device 5 and the second sensing device 6, so that the main control device 10 receives the temperature signal transmitted by the temperature sensor 4, the main control device 10 is electrically connected to a heating component 9 of the cooking appliance 100, and according to the received temperature signal, the main control device 10 controls the heating component9 to work according to a preset program, so that accurate temperature control of food in the inner pot 3 during cooking is achieved. The problems in the related art that the use of Bluetooth devices brings high costs and direct connection of the temperature sensor with the electric circuit of the product causes safety risks are solved.

Whether the main control device 10 and the first sensing device 5 are mounted on the pot body 1 or on the upper cover 2 may be determined according to the position of a power supply device of the cooking appliance, specifically, when the power supply device is mounted on the pot body 1, the main control device 10 and the first sensing device 5 are also mounted on the pot body 1, and when the power supply device is mounted on the upper cover 2, the main control device 10 and the first sensing device 5 are also mounted on the upper cover 2. The second sensing device may be disposed either on the pot body or on the upper cover, only if the first coil is capable of coupling with the second coil.

The upper cover 2 covers the pot body 1, and further, the upper cover 2 matches with the inner pot 3, and the upper cover 2 covers the inner pot 3.

### Embodiment 1:

A cooking appliance 100 comprises a pot body 1, an inner pot 3 disposed in the pot body 1, an upper cover 2 covering the pot body 1, a main control device 10, a temperature sensor 4 and a communication device. The main control device 10 is disposed on one of the pot body 1 and the upper cover 2; the communication device comprises a first sensing device 5 and a second sensing device 6 which are correspondingly disposed, the first sensing device 5 is disposed on one of the pot body 1 and the upper cover 2, and is electrically connected to the main control device 10, the first sensing device 5 comprises a first coil 51, the second sensing device 6 is disposed on the pot body 1 or on the upper cover 2, the second sensing device 6 comprises a second coil 61, and the second coil 61 is capable of coupling with the first coil 51; and the temperature sensor 4 is electrically connected with the second sensing device 6 via a first wire 7, and can be placed in the inner pot 3.

Preferably, the second sensing device 6 further comprises a processing circuit which is electrically connected to the temperature sensor 4, and the processing circuit of the second sensing device 6 is powered by a coupling action of the first sensing device 5 and the second sensing device 6.

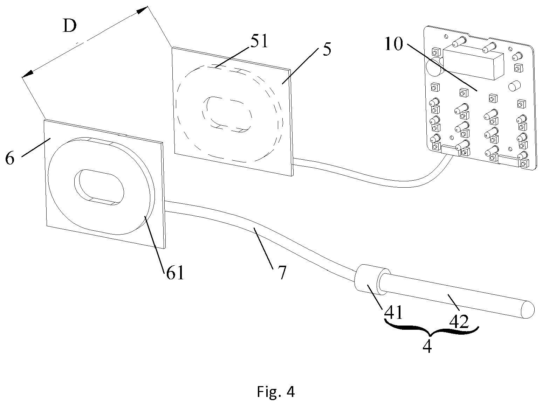

Preferably, as shown in Fig. 4, the first coil 51 at least partially covers the second coil 61, and the distance D between the first coil 51 and the second coil 61 is less than or equal to 15 mm.

The first coil 51 and the second coil 61are close to each other or directly contact each other, and the first coil 51 and the second coil 61 are completely overlapped or partially overlapped and the distance between the first coil and the second coil is less than or equal to 15 mm, so that the first coil 51 and the second coil 61 can be effectively coupled. Preferably, the first coil 51 and the second coil 61 are both correspondingly mounted along a direction perpendicular to a horizontal plane, i.e. the first coil 51 and the second coil 61 are both disposed along a vertical plane. Or, the first coil 51 and the second coil 61 are both disposed along a horizontal plane and are in up-down arrangement, and of course, it is also possible that the first coil 51 and the second coil 61 are disposed along other directions.

Preferably, as shown in Fig. 4, the first coil 51 and the second 61 coil are arranged in planar shapes, and of course, it is also possible that the first coil 51 and the second coil 61arearranged in other shapes such as cylindrical shapes. The first coil 51 and the second coil 61 may be in circular shapes or non-circular shapes such as square shapes.

Preferably, the first sensing device comprises a plurality of first coils and the second sensing device comprises a plurality of second coils to further improve the coupling effect of the first sensing device and the second sensing device.

Preferably, the first sensing device 5 further comprises a first magnetic conductive plate, and the first coil 51 is disposed on the first magnetic conductive plate; and/or the second sensing device 6 further comprises a second magnetic conductive plate, and the second coil 61 is disposed on the second magnetic conductive plate.

By providing the first magnetic conductive plate and/or the second magnetic conductive plate, the coupling effect of the first coil 51 and the second coil 61 can be further enhanced. In practical application, the number of winding turns of the first coil 51 and the second coil 61, the distance between the first coil 51 and the second coil 61 and the like may be specifically set to enable the first coil 51 and the second coil 61to be effectively coupled.

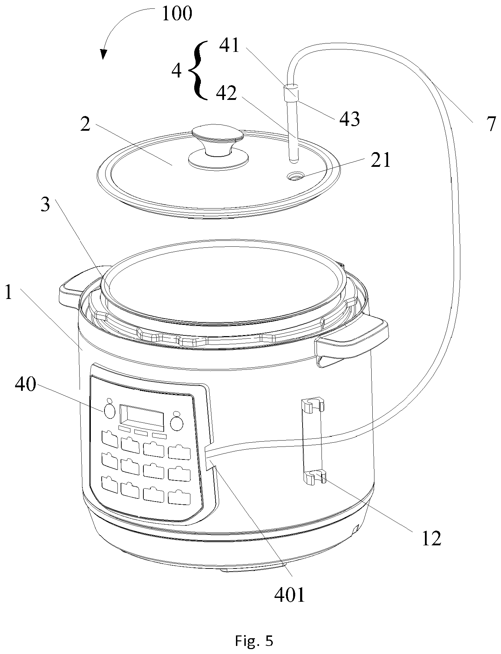

Preferably, as shown in Fig. 5, the upper cover 2 is provided with a through hole 21 for the temperature sensor 4 to pass through, and the upper cover 2 is provided with a limiting mating part, the temperature sensor 4 is provided with a limiting part, the limiting part mates with the limiting mating part to limit the position of the temperature sensor 4 within the through hole 21.

In order to enable the temperature sensor 4 to measure the temperature of food in the inner pot 3, the upper cover 2 is provided with the through hole 21, and after the temperature sensor 4 is inserted into the through hole 21, the limiting part mates with the limiting mating part to limit the position of the temperature sensor 4 on the upper cover 2.

In a first specific embodiment, the temperature sensor 4 comprises a connecting part 41 and a testing part 42 connected to the connecting part 41, the testing part 42 is internally provided with a temperature sensing part, the connecting part 41 has a cross-sectional area larger than that of the testing part 42, the limiting part is a limiting step 43formed at a joint of the connecting part 41 and the testing part 42, the through hole 21 has a cross-sectional area larger than or equal to that of the testing part 42 and smaller than that of the connecting part 41, the limiting mating part is a part, close to the through hole 21, of an upper surface of the upper cover 2, and the testing part 42 is inserted into the through hole 21 such that the limiting step 43 abuts against the upper surface of the upper cover 2.

The temperature sensor 4 comprises the connecting part 41 and the testing part 42 which is disposed below the connecting part 41 and connected to the connecting part 41, and the testing part 42 is internally provided with the temperature sensing part, thereby achieving temperature measurement of food in the inner pot. The connecting part 41 has a cross-sectional area larger than that of the testing part 42, so that the limiting step 43 is formed at the joint of the connecting part 41 and the testing part 42, and as the through hole 21 has a cross-sectional area larger than or equal to that of the testing part 42 and smaller than that of the connecting part 41, after the testing part 42 is inserted into the through hole 21, the limiting step 43 abuts against the upper surface of the upper cover 2.

In a second specific embodiment, the limiting part is an external thread disposed on the temperature sensor 4, and the limiting mating part is an internal thread disposed on an inner wall of the through hole 21 such that the temperature sensor 4 and the inner wall of the through hole 21 are threadingly connected.

The inner wall of the through hole 21 is provided with the internal thread, the temperature sensor 4 is provided with the external thread matching with the internal thread, and after the temperature sensor 4 is inserted into the through hole 21, the internal thread mates with the external thread to position the temperature sensor 4 on the upper cover 2.

In a third specific embodiment, the limiting part is a first snap joint disposed on the temperature sensor 4, the limiting mating part is a second snap joint disposed on the upper cover 2, and the temperature sensor 4 is inserted into the through hole 21 such that the first snap joint mates with the second snap joint to snap the temperature sensor onto the upper cover.

The temperature sensor 4 is provided with the first snap joint, the upper cover 2 is provided with the second snap joint, and after the temperature sensor 4 is inserted into the through hole 21, the first snap joint mates with the second snap joint to position the temperature sensor 4 on the upper cover 2.

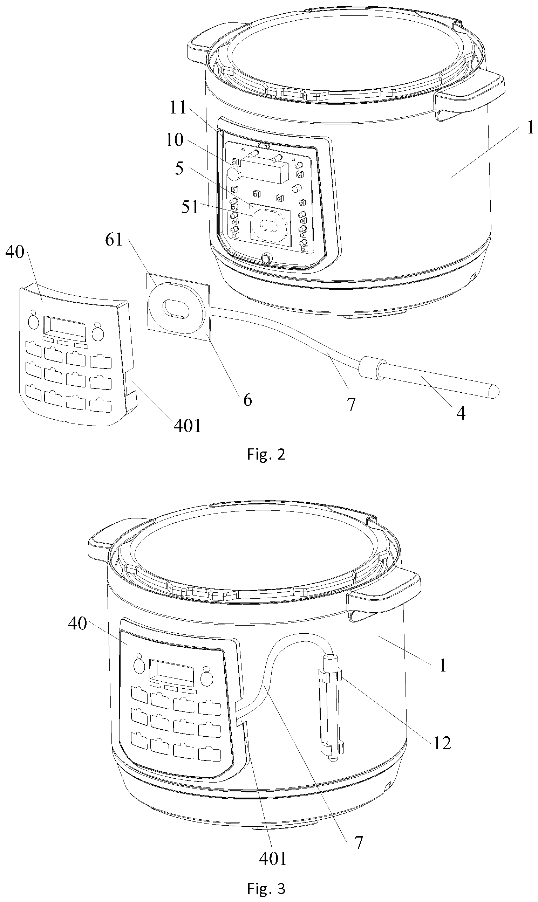

Preferably, as shown in Fig. 2, the main control device 10 and the first sensing device 5 are disposed on a circuit board of the cooking appliance 100; or as shown in Fig. 1, the main control device 10 is electrically connected to the first sensing device 5 via a second wire 30.

The main control device 10 and the first sensing device 5 are on the same circuit board, so that the main control device 10 is electrically connected to the first sensing device 5; or the main control device 10 is electrically connected to the first sensing device 5 via the second wire 30.

Preferably, the first sensing device 5 is disposed inside one of the pot body 1 and the upper cover 2, and the second sensing device 6 is disposed inside or outside the pot body 1 or the upper cover 2.

Preferably, as shown in Fig. 2, one of the pot body 1 and the upper cover 2 is provided with a mounting recess 11 with an open end, and the first sensing device 5 and the second sensing device 6 are positioned in the mounting recess 11.

One of the pot body 1 and the upper cover 2 is provided with the mounting recess 11 with an open end, preferably, the mounting recess opens outwards, and the first sensing device 5 and the second sensing device 6 are positioned in the mounting recess 11 such that the first sensing device 5 and the second sensing device 6 are both positioned inside the pot body 1 or the upper cover 2.

Of course, it is also possible that the second sensing device 6 is mounted outside the pot body 1 or the upper cover 2, for example, the second sensing device 6 is covered with a shield, and the second sensing device 6 is connected to the pot body 1 or the upper cover 2 via the shield.

Preferably, as shown in Figs. 2 and 3, the main control device 10 is positioned in the mounting recess 11, the cooking appliance 100 further comprises a control box 40, the control box 40 covers the open end of the mounting recess 11, and the control box 40 is provided with a wire outlet 401 for the first wire 7 to go out.

After the second sensing device is mounted in the mounting recess, the open end of the mounting recess is covered with the control box, and one end, connected to the temperature sensor, of the first wire protrudes out through the wire outlet, so that the temperature sensor can be externally arranged.

Preferably, the pot body 1 or the upper cover 2 is provided with a mounting part, and the temperature sensor 4 is provided with a mounting mating part mating with the mounting part such that the temperature sensor 4 can be placed on the pot body1 or the upper cover 2.

When the temperature sensor 4 is not in-use, the temperature sensor 4 may be taken out of the inner pot. In order to facilitate storage of the temperature sensor 4 in a non-working state, the pot body 1 may be provided with the mounting part, while the temperature sensor 4 is provided with the mounting mating part, and the mounting part mates with the mounting mating part such that the temperature sensor 4 can be placed on the pot body 1. Of course, it is also possible that the upper cover 2 is provided with the mounting part such that the temperature sensor 4 in the non-working state can be placed on the upper cover 2.

Preferably, as shown in Fig. 3, the mounting part is a snap-in groove 12 disposed on the pot body 1 or the upper cover 2, and the temperature sensor 4 can be snap-fit into the snap-in groove 12.

The pot body 1 or the upper cover 2 is provided with the snap-in groove 12, and the temperature sensor 4 in the non-working state can be snap-fit into the snap-in groove 12, preferably, the snap-in groove 12 is disposed on the outer surface of the pot body 1 or the outer surface of the upper cover 2, while the mounting mating part is a part of the temperature sensor 4, and the part is snap-fit into the snap-in groove 12, or the mounting mating part is a snap-on piece disposed on the temperature sensor 4 and matching with the snap-in groove 12. Of course, it is also possible that the pot body 1 or the upper cover 2 is provided with the snap-on piece, and the temperature sensor 4 is provided with the snap-in groove. As shown in Fig. 3, the pot body is provided with the snap-in groove which is arranged along an up-down direction, and the testing part of the temperature sensor is snap-fit into the snap-in groove, and further, the limiting step abuts against the upper surface of the snap-in groove.

Or, the mounting part is a second hook disposed on the pot body 1 or the upper cover 2, and the mounting mating part is a second hanging hole disposed on the temperature sensor 4 and matching with the second hook; or the mounting part is a second hanging hole disposed on the pot body 1 or the upper cover 2, and the mounting mating part is a second hook disposed on the temperature sensor 4 and matching with the second hanging hole.

The pot body 1 or the upper cover 2 is provided with the second hook, the temperature sensor 4 is provided with the second hanging hole, and the temperature sensor 4 in the non-working state is stored on the pot body 1 or the upper cover 2 through the mating of the second hook and the second hanging hole. Or, the pot body 1 or the upper cover 2 is provided with the second hanging hole, the temperature sensor 4 is provided with the second hook, and the temperature sensor 4 in the non-working state is stored on the pot body 1 or the upper cover 2 through the mating of the second hook and the second hanging hole.

Preferably, as shown in Fig. 1, the cooking appliance further comprises a first temperature sensor 20, and the first temperature sensor 20 is disposed on the pot body 1 or the upper cover 2, and for connected products, such as an electric rice cooker, it is also possible that both the pot body and the upper cover are internally provided with first temperature sensors for detecting the working temperature of cooking of routine functions. Preferably, when the main control device is mounted on the pot body, the first temperature sensor is mounted on the pot body, and when the main control device is mounted on the upper cover, the first temperature sensor is mounted on the upper cover. The main control device receives detection data of the first temperature sensor and performs processing, and controls the heating component to work according to a preset program. Preferably, the first temperature sensor is positioned below the inner pot and used for detecting the temperature at the bottom of the inner pot, and when the temperature sensor works, the first temperature sensor mainly provides a protective function, preventing the inner pot from boiling without water and the like.

### Embodiment 2:

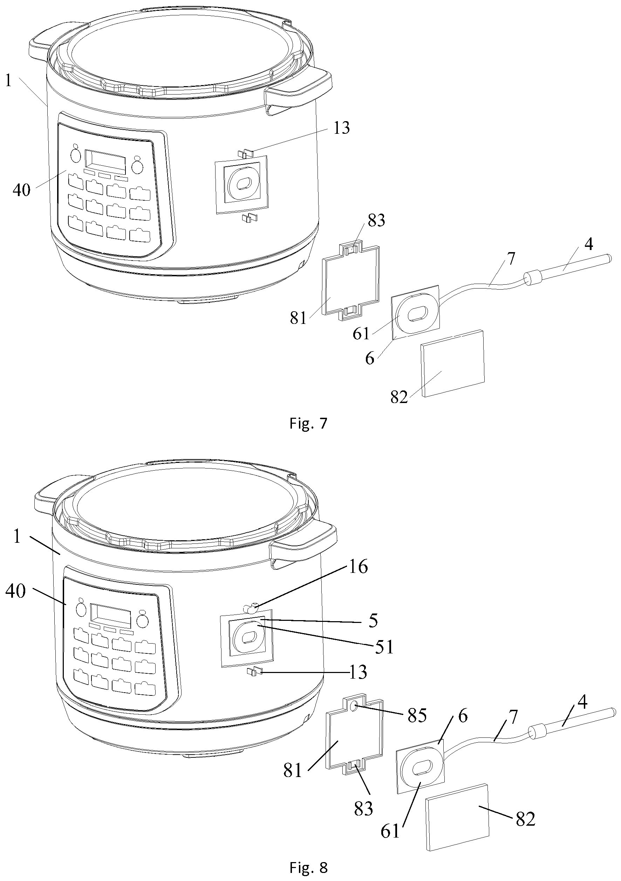

A cooking appliance 100, as shown in Fig. 7, comprises a pot body 1, an inner pot 3 disposed in the pot body 1, an upper cover 2 covering the pot body 1, a main control device 10, a temperature sensor 4 and a communication device, the main control device 10 is disposed on one of the pot body 1 and the upper cover 2; the communication device is disposed on one of the pot body 1 and the upper cover 2 and comprises a first sensing device 5 and a second sensing device 6 which are correspondingly disposed, the first sensing device 5 is disposed on one of the pot body 1 and the upper cover 2, and is electrically connected to the main control device 10, the first sensing device 5 comprises a first coil 51, the second sensing device 6 comprises a second coil 61, and the second coil 61 is capable of coupling with the first coil 51,wherein, the second sensing device 6 is covered with a shield 8, and the second sensing device 6 is connected to the pot body 1 or the upper cover 2 via the shield 8; and the temperature sensor 4 can be placed in the inner pot 3.

The second sensing device 6 is covered with the shield 8, and the shield 8 is connected to the pot body 1 or the upper cover 2, so that the second sensing device 6 is mounted on the pot body 1 or the upper cover 2 via the shield. The second sensing device 6 is connected with the shield 8, so that the second sensing device 6 can be disposed on the pot body 1 or the upper cover 2 as an independent accessory, which makes minor modifications to the structure of the pot body 1 or the upper cover 2, and makes the second sensing device convenient to mount and/or detach.

Whether the main control device 10 and the first sensing device 5 are mounted on the pot body 1 or on the upper cover 2 may be determined according to the position of a power supply device of the cooking appliance, specifically, when the power supply device is mounted on the pot body 1, the main control device 10 and the first sensing device 5 are also mounted on the pot body 1, and when the power supply device is mounted on the upper cover 2, the main control device 10 and the first sensing device 5 are also mounted on the upper cover 2. The second sensing device may be disposed either on the pot body or on the upper cover via the shield, only if the first coil is capable of coupling with the second coil.

Preferably, the first sensing device 5 is disposed inside one of the pot body 1 and the upper cover 2, and the second sensing device 6 is disposed inside or outside the pot body 1 or the upper cover 2.

Preferably, the shield 8 is provided with a mounting hole, and the second sensing device 6 is positioned in the mounting hole; or the second sensing device is 6 fixed to the shield by means of insert-molding process; or the second sensing device is bonded to the shield.

As for the manner in which the shield 8 and the second sensing device 8 are connected, the shield 8 may be provided in advance with a mounting hole for mounting the second sensing device 6. The shield 8 may be of integral structure, as shown in Fig. 1, or the shield 8 may a first shield 81 and a second shield 82, the first shield 81 and the second shield 82 are positioned on two sides of the second sensing device, respectively, and a mounting hole for mounting the second sensing device is formed after the first shield 81 and the second shield 82 are spliced. Preferably, the first shield 81 is disposed on one side of the second sensing device 6 close to the pot body 1 or the upper cover 2 on which the second sensing device 6 is mounted, the second shield 82 and the first shield 81 are connected by snap-fit, fasteners and the like, the first shield 81 is connected to the pot body 1 or the upper cover 2 on which the second sensing device 6 is mounted, and of course, it is also possible that the second shield 82 is connected to the pot body 1 or the upper cover 2.

It is also possible that the second sensing device 6 and the shield 8 are formed by means of insert-molding process.

Preferably, the shield 8 is provided with a mounting structure, and the pot body 1 or the upper cover 2 is provided with a mounting mating structure, the mounting structure mates with the mounting mating structure to connect the shield 8 to the pot body 1 or the upper cover 2.

When the shield 8 is mounted on the pot body 1, the shield 8 and the pot body 1 may be either fixedly connected or detachably connected. When the shield 8 is mounted on the upper cover 2, the shield 8 and the upper cover 2 may be either fixedly connected or detachably connected.

Preferably, as shown in Fig. 7, the mounting structure is a third snap joint disposed on the shield 8, and the mounting mating structure is a fourth snap joint disposed on the pot body 1 or the upper cover 2 and matching with the third snap joint such that snap the shield 8 onto one of the pot body 1 and the upper cover 2.

The shield 8 is provided with the third snap joint, and the pot body 1 is provided with the fourth snap joint matching with the third snap joint. Specifically, the third snap joint is a snap-on piece 13 toward the pot body 1, and the fourth snap joint is a rib, a step or a hole disposed on the pot body 1, or the fourth snap joint is a snap-on piece 13 toward the shield 8, and the third snap joint is a rib, a step or a hole 83disposedonthe shield 8. Of course, it is also possible that the shield is connected to the upper cover.

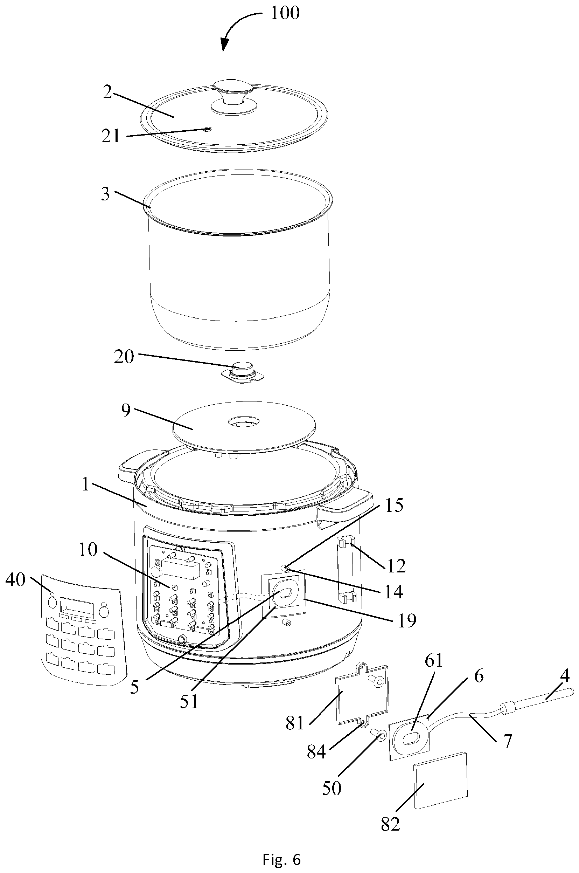

Preferably, as shown in Fig. 6, one of the pot body 1 and the upper cover 2 comprises a body and a housing sleeving on the body, the first sensing device 5 is positioned in the housing, and the housing is provided with a gap 19 at a position corresponding to the first sensing device 5, wherein the housing is a metal housing.

The pot body 1 comprises the metal housing, and when the first sensing device 5 is positioned in the housing, the housing is provided with the gap 19 at a position corresponding to the first sensing device 5 to prevent shielding caused by the metal housing so as to ensure the coupling effect of the first sensing device 5 and the second sensing device 6. When the first sensing device 5 is positioned inside the upper cover 2, the housing of the upper cover 2 is provided with a gap at a position corresponding to the first sensing device 5.

Preferably, as shown in Fig. 4, the first coil 51 at least partially covers the second coil 61, and the distance D between the first coil 51 and the second coil 61 is less than or equal to 15 mm.

The first coil 51 and the second coil 61 are close to each other or directly contact each other, and the first coil 51 and the second coil 61 are completely overlapped or partially overlapped and the distance between the first coil and the second coil is less than or equal to 15 mm, so that the first coil 51 and the second coil 61 can be effectively coupled. Preferably, the first coil 51 and the second coil 61 are both correspondingly mounted along a direction perpendicular to a horizontal plane, i.e. the first coil 51 and the second coil 61 are both disposed along a vertical plane. Or, the first coil and the second coil are both disposed along a horizontal plane and are in up-down arrangement, and of course, it is also possible that the first coil and the second coil are disposed along other directions.

Preferably, the first coil 51 and the second 61 coil are arranged in planar shapes, and of course, it is also possible that the first coil 51 and the second coil 61 are arranged in other shapes such as cylindrical shapes. The first coil 51 and the second coil 61 may be in circular shapes or non-circular shapes such as square shapes. Preferably, the first coil 51 and the second coil 61 are in planar ring shapes.

Preferably, the first sensing device comprises a plurality of first coils and the second sensing device comprises a plurality of second coils to further improve the coupling effect of the first sensing device and the second sensing device.

Preferably, the first sensing device further comprises a first magnetic conductive plate, and the first coil is disposed on the first magnetic conductive plate; and/or the second sensing device further comprises a second magnetic conductive plate, and the second coil is disposed on the second magnetic conductive plate.

By providing the first magnetic conductive plate and/or the second magnetic conductive plate, the coupling effect of the first coil and the second coil can be further enhanced. In practical application, the number of winding turns of the first coil and the second coil, the distance between the first coil and the second coil and the like may be specifically set to enable the first coil and the second coil to be effectively coupled.

Preferably, as shown in Fig. 5, the upper cover 2 is provided with a through hole 21 for the temperature sensor 4 to pass through, and the upper cover 2 is provided with a limiting mating part, the temperature sensor 4 is provided with a limiting part, the limiting part mates with the limiting mating part to limit the temperature sensor 4 within the through hole 21.

In order to enable the temperature sensor 4 to measure the temperature of food in the inner pot 3, the upper cover 2 is provided with the through hole 21, and after the temperature sensor 4 is inserted into the through hole 21, the limiting part mates with the limiting mating part to limit the position of the temperature sensor 4 on the upper cover 2.

Preferably, as shown in Fig. 5, the temperature sensor 4 comprises a connecting part 41 and a testing part 42 connected to the connecting part 41, the testing part 42 is internally provided with a temperature sensing part, the cross-sectional area of the connecting part 41 is larger than the cross-sectional area of the testing part 42, the limiting part is a limiting step 43 formed at a joint of the connecting part 41 with the testing part 42, the cross-sectional area of the through hole 21 is larger than or equal to the cross-sectional area of the testing part 42 and smaller than the cross-sectional area of the connecting part 41, the limiting mating part is a part on the upper surface of the upper cover 2 close to the through hole 21, and the testing part 42 is inserted into the through hole 21 such that the limiting step 43 abuts against the upper surface of the upper cover 2; or the limiting part is an external thread disposed on the temperature sensor 4, and the limiting mating part is an internal thread disposed on an inner wall of the through hole 21 such that the temperature sensor 4 and the through hole 21 are threadingly connected; or the limiting part is a first snap joint disposed on the temperature sensor 4, the limiting mating part is a second snap joint disposed on the upper cover 2, and the temperature sensor 4 is inserted into the through hole 21 such that the first snap joint mates with the second snap joint to snap the temperature sensor 4 onto the upper cover 2.

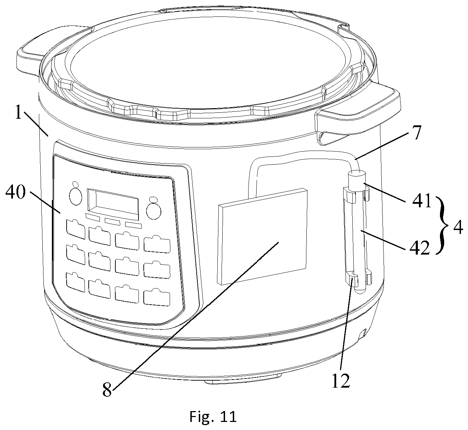

Preferably, as shown in Fig. 11, the pot body 1 or the upper cover 2 is provided with a mounting part, and the temperature sensor 4 is provided with a mounting mating part mating with the mounting part such that the temperature sensor 4 can be placed on the pot body 1 or the upper cover 2.

When the temperature sensor 4 is not in-use, the temperature sensor 4 may be taken out of the inner pot. In order to facilitate storage of the temperature sensor 4 in a non-working state, the pot body 1 may be provided with the mounting part, while the temperature sensor 4 is provided with the mounting mating part, and the mounting part mates with the mounting mating part such that the temperature sensor 4 can be placed on the pot body 1. Of course, it is also possible that the upper cover 2 is provided with the mounting part such that the temperature sensor 4 in the non-working state can be placed on the upper cover 2.

Preferably, as shown in Fig. 5, the mounting part is a snap-in groove 12 disposed on the pot body 1 or the upper cover 2, and the temperature sensor 4 can be snap-fit into the snap-in groove 12; or the mounting part is a hook disposed on the pot body 1 or the upper cover 2, and the mounting mating part is a hanging hole disposed on the temperature sensor 4 and matching with the hook; or the mounting part is a hanging hole disposed on the pot body 1 or the upper cover 2, and the mounting mating part is a hook disposed on the temperature sensor 4 and matching with the hanging hole.

Preferably, the cooking appliance further comprises a first temperature sensor 20, and the first temperature sensor 20 is disposed on the pot body 1 or the upper cover 2, and for connected products, such as an electric rice cooker, it is also possible that both the pot body and the upper cover are internally provided with first temperature sensors for detecting working temperature of cooking of routine functions. Preferably, when the main control device is mounted on the pot body, the first temperature sensor is mounted on the pot body, and when the main control device is mounted on the upper cover, the first temperature sensor is mounted on the upper cover. The main control device receives detection data of the first temperature sensor and performs processing, and controls the heating component to work according to a preset program. Preferably, the first temperature sensor is positioned below the inner pot and used for detecting the temperature at the bottom of the inner pot, and when the temperature sensor works, the first temperature sensor mainly provides a protective function, preventing the inner pot from boiling without water and the like.

The main control device and the first sensing device are disposed on a circuit board of the cooking appliance; or the main control device is electrically connected to the first sensing device through a second wire.

### Embodiment 3:

This embodiment differs from the Embodiment 2 in that, as shown in Fig. 6, the mounting structure 8 is a first screw hole 84 disposed in the shield 8, and the mounting mating structure is a second screw hole 14disposed in the pot body 1 or the upper cover 2 and matching with the first screw hole 84 such that the shield 8 is connected to the pot body 1 or the upper cover 2 by screws

The shield 8 is provided with the first screw hole 84, the pot body 1 is provided with a screw column 15 corresponding to the first screw hole 84, and the screw column 15 is provided with the second screw hole 14 such that a screw 50 passes through the first screw hole 84 and the second screw hole 14 to connect the shield 8 and the pot body 1. Of course, it is also possible that the shield is connected to the upper cover.

### Embodiment 4:

This embodiment differs from the Embodiment 2 in that, as shown in Fig. 8, the mounting structure is a first hook disposed on the shield 8, and the mounting mating structure is a first hanging hole disposed on the pot body 1 or the upper cover 2 and matching with the first hook. Or, the mounting structure is a first hanging hole 85 disposed in the shield 8, and the mounting mating structure is a first hook 16 disposed on the pot body 1 or the upper cover 2 and matching with the first hanging hole 85.

The shield 8 is provided with the first hook, and the pot body 1 is provided with the first hanging hole, or the shield 8 is provided with the first hanging hole, and the pot body 1 is provided with the first hook 16, such that the first hook 16 mates with the first hanging hole 85 to mount the shield onto the pot body. Of course, it is also possible that the shield is connected to the upper cover.

### Embodiment 5:

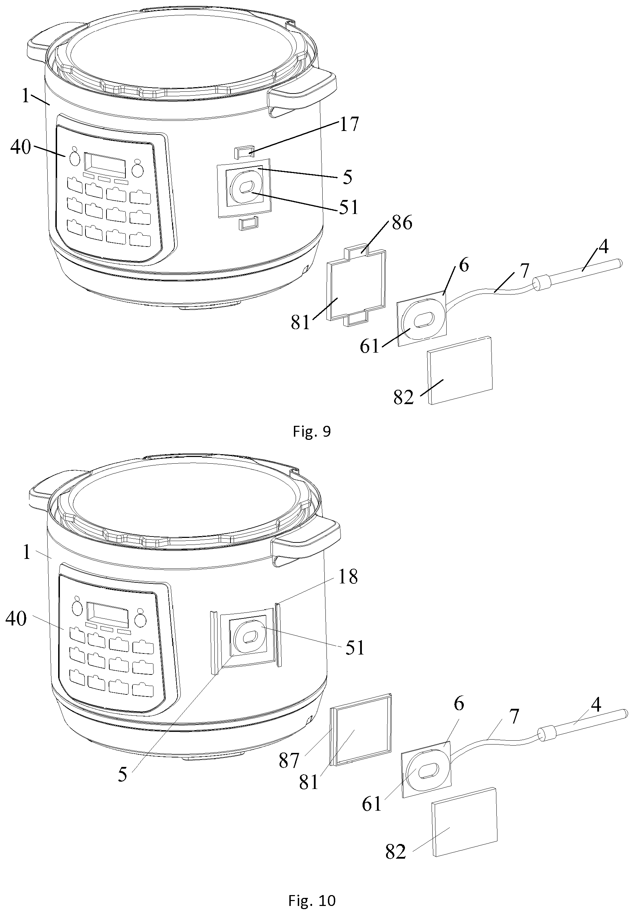

This embodiment differs from the Embodiment 2 in that, as shown in Fig. 9, the mounting structure is a first attraction piece 86 disposed on the shield 8, and the mounting mating structure is a second attraction piece 17 disposed on the pot body 1 or the upper cover 2 and capable of magnetically attracting the first attraction piece 86 such that the shield 8 is attached to the pot body 1 or the upper cover 2 through attraction between the first attraction piece 86 and the second attraction piece 17.

The shield 8 is provided with the first attraction piece 86, the pot body 1 is provided with the second attraction piece 17 capable of magnetically attracting the first attraction piece 86, and one of the first attraction piece 86 and the second attraction piece 17 is a magnet, while the other one is a magnet, a magnetic metal or a permanent magnet. The shield 8 is provided in advance with a shield limiting hole matching with the first attraction piece 86, and the first attraction piece 86 is limited within the shield limiting hole, or the first attraction piece 86 is fixed to the shield by means of insert-molding process. As for the manner in which the second attraction piece 17 is fixed, the pot body 1 is provided in advance with a pot body limiting hole matching with the second attraction piece 17, and the second attraction piece 17 is limited within the pot body limiting hole, or the second attraction piece 17 is fixed to the pot body 1 by means of insert-molding process. Of course, it is also possible that the shield is connected to the upper cover.

### Embodiment 6:

This embodiment differs from the Embodiment 2 in that, as shown in Fig. 10, the mounting structure is a sliding rail 87 disposed on the shield 8, the mounting mating structure is a sliding groove 18 disposed on the pot body 1 or the upper cover 2 and matching with the sliding rail 87, and the sliding rail 87 is in the sliding groove 18; or the mounting structure is a sliding groove disposed on the shield 8, the mounting mating structure is a sliding rail disposed on the pot body 1 or the upper cover 2 and capable of matching with the sliding groove, and the sliding rail is positioned in the sliding groove.

The shield 8 is provided with the sliding rail 87, the pot body 1 is provided with the sliding groove 18 matching with the sliding rail 87, and preferably, the sliding groove 18 is disposed on an outer surface of the pot body 1; or the shield 8 is provided with the sliding groove, the pot body 1 is provided with the sliding rail matching with the sliding groove, and preferably, the sliding rail is arranged on the outer surface of the pot body 1. Of course, it is also possible that the shield is connected to the upper cover.

### Embodiment 7:

This embodiment differs from the Embodiment 2 in that, the mounting structure is a rotating shaft disposed on the shield 8, and the mounting mating structure is a shaft hole disposed in the pot body 1 or the upper cover 2 and matching with the rotating shaft such that the shield 8 is rotatably connected to the pot body 1 or the upper cover 2; or the mounting structure is a shaft hole disposed in the shield 8, and the mounting mating structure is a rotating shaft disposed on the pot body 1 or the upper cover 2 and capable of matching with the shaft hole such that the shield 8 is rotatably connected to the pot body 1 or the upper cover 2.

The shield 8 and the pot body 1 can be rotatably connected. Specifically, the shield 8 is provided with the rotating shaft, the pot body 1 is provided with the shaft hole, and the rotating shaft is inserted into the shaft hole, or the shield 8 is provided with the shaft hole, the pot body 1 is provided with the rotating shaft, or the shield 8 is provided with a first shaft hole, the pot body 1 is provided with a second shaft hole, and a rotating shaft passes through the first shaft hole and the second shaft hole such that the shield is rotatably connected to the pot body. Of course, it is also possible that the shield is connected to the upper cover.

### Embodiment 8:

This embodiment differs from the Embodiment 2 in that, the shield 8 is adhered to the pot body 1 or the upper cover 2.

### Embodiment 9:

This embodiment differs from the Embodiment 2 in that the pot body 1 or the upper cover 2 is provided with a limiting hole with an open end, and the shield 8 covers the open end of the limiting hole and is limited within the limiting hole.

The limiting hole with an open end is formed in the pot body 1 or the upper cover 2, preferably, the limiting hole opens outwards, and the shield 8 covers the open end of the limiting hole and is limited within the limiting hole. Of course, it is also possible that the shield is connected to the upper cover.

Of course, the manners in which the shield is fixed to the pot body or the upper cover described in the above Embodiments 2 to 9 can also be implemented in combination. For example, in Fig. 8, the pot body is provided with a hook and a snap-on piece, and the shield is provided with a hanging hole matching with the hook and a hole matching with the snap-on piece.

In summary, according to the cooking appliance 100 provided by the embodiments of the present invention, the first sensing device 5 supplies power to the processing circuit in the second sensing device 6 through the coupling action of the first sensing device 5 and the second sensing device 6, and the temperature sensor 4 transmits the detected temperature signal to the main control device 10 through the coupling action of the first sensing device 5 and the second sensing device 6, and the main control device 10 controls the heating component 9 to work according to the temperature signal, thereby achieving accurate temperature control of the food in the inner pot 3 during cooking.

In the description of the present invention, unless explicitly specified and defined otherwise, the term "a plurality of" means two or more; unless specified or indicated otherwise, the terms "connected", "fixed" and the like are to be construed broadly, e.g., "connected" may be fixedly connected, and may also be detachably connected, or integrally connected, or electrically connected; may be either directly connected or indirectly connected through an intermediary. The specific meaning of the above terms in the present invention will be understood by those of ordinary skill in the art, as the case may be.

In the description of the present specification, it should be understood that the terms "up", "down", "front", "back", "left", "right" and the like indicate orientations or positional relationships that are based on the orientations or positional relationships shown in the drawings and are intended merely to facilitate the description of the present invention and to simplify the description, rather than to indicate or imply that the means or unit being referred to necessarily has a particular orientation or is necessarily constructed or operated in a particular orientation, therefore, it is not to be construed as limiting the invention.

In the description of this specification, the description of the terms "one embodiment", "some embodiments", "specific embodiments" and the like mean that particular features, structures, materials, or characteristics described in connection with the embodiments or examples are included in at least one embodiment or example of the invention. In this specification, schematic representations of the above terms do not necessarily refer to the same embodiment or example.

## Claims

1. A cooking appliance (100), comprising a pot body (1), an inner pot (3) disposed in the pot body (1) and an upper cover (2) covering the pot body (1),
the cooking appliance further comprising:
a main control device (10) disposed on one of the pot body (1) and the upper cover (2), **characterized in that**
the cooking appliance further comprises a communication device comprising a first sensing device (5) and a second sensing device (6) which are correspondingly disposed, the first sensing device (5) being disposed on the one of the pot body (1) and the upper cover (2), and being electrically connected to the main control device (10), the first sensing device (5) comprising a first coil (51), the second sensing device (6) being disposed on the pot body (1) or on the upper cover (2), the second sensing device (6) comprising a second coil (61), and the second coil (61) being capable of coupling with the first coil (51); and
a temperature sensor (4) which is electrically connected to the second sensing device (6) via a first wire (7), and can be placed in the inner pot (3).

2. The cooking appliance according to claim 1, wherein
the first coil (51) at least partially covers the second coil (61), and a distance between the first coil (51) and the second coil (61) is less than or equal to 15 mm.

3. The cooking appliance according to claim 1 or 2, wherein
the first sensing device (5) further comprises a first magnetic conductive plate, and the first coil (51) is disposed on the first magnetic conductive plate; and/or
the second sensing device (6) further comprises a second magnetic conductive plate, and the second coil (61) is disposed on the second magnetic conductive plate.

4. The cooking appliance according to any one of claims 1 to 3, wherein
the upper cover (2) is provided with a through hole (21) for the temperature sensor (4) to pass through, and the upper cover (2) is provided with a limiting mating part, the temperature sensor (4) is provided with a limiting part, the limiting part mates with the limiting mating part to limit the temperature sensor (4) within the through hole (21).

5. The cooking appliance according to any one of claims 1 to 4, wherein
the temperature sensor (4) comprises a connecting part (41) and a testing part (42) connected to each other, the connecting part (41) is connected to the first wire (7), the testing part (42) is internally provided with a temperature sensing part, a cross-sectional area of the connecting part (41) is larger than a cross-sectional area of the testing part (42), the limiting part is a limiting step (43) formed at a joint of the connecting part (41) with the testing part (42), a cross-sectional area of the through hole (21) is larger than or equal to the cross-sectional area of the testing part (42) and smaller than the cross-sectional area of the connecting part (41), the limiting mating part is a part on the upper surface of the upper cover (2), close to the through hole (21), and the testing part (42) is inserted into the through hole (21), and the limiting step (43) abuts against the upper surface of the upper cover (2); or
the limiting part is an external thread disposed on the temperature sensor (4), and the limiting mating part is an internal thread disposed on an inner wall of the through hole (21) such that the temperature sensor (4) and the through hole (21) are threadingly connected; or
the limiting part is a first snap joint disposed on the temperature sensor (4), the limiting mating part is a second snap joint disposed on the upper cover (2), and the temperature sensor (4) is inserted into the through hole (21) such that the first snap joint mates with the second snap joint to snap the temperature sensor (4) onto the upper cover (2).

6. The cooking appliance according to any one of claims 1 to 5, wherein
the main control device (10) and the first sensing device (5) are disposed on a circuit board of the cooking appliance (100); or the main control device (10) is electrically connected to the first sensing device (5) via a second wire (30).

7. The cooking appliance according to any one of claims 1 to 6, wherein
the first sensing device (5) is disposed inside one of the pot body (1) and the upper cover (2), and the second sensing device (6) is disposed inside or outside the pot body (1) or the upper cover (2).

8. The cooking appliance according to any one of claims 1 to 7, wherein
the second sensing device (6) is covered with a shield (8), and the second sensing device (6) is connected to the pot body (1) or to the upper cover (2) via the shield (8), wherein
the shield (8) is preferably provided with a mounting structure, and the pot body (1) or the upper cover (2) is preferably provided with a mounting mating structure, the mounting structure preferably mates with the mounting mating structure to connect the shield (8) to the pot body (1) or to the upper cover (2).

9. The cooking appliance according to claim 8, wherein
the mounting structure is a third snap joint disposed on the shield (8), and the mounting mating structure is a fourth snap joint disposed on the pot body (1) or on the upper cover (2) and matching with the third snap joint such that snap the shield (8) onto the pot body (1) or onto the upper cover (2); or
the mounting structure is a first screw hole (84) disposed on the shield (8), and the mounting mating structure is a second screw hole (14) disposed on the pot body (1) or the upper cover (2) and matching with the first screw hole (84) such that the shield (8) is connected to the pot body (1) or to the upper cover (2) by screws; or
the mounting structure is a first hook (16) disposed on the shield (8), and the mounting mating structure is a first hanging hole (85) disposed on the pot body (1) or on the upper cover (2) and matching with the first hook (16); or
the mounting structure is a first hanging hole (85) disposed on the shield (8), and the mounting mating structure is a first hook (16) disposed on the pot body (1) or on the upper cover (2) and matching with the first hanging hole (85); or
the mounting structure is a first attraction piece (86) disposed on the shield (8), and the mounting mating structure is a second attraction piece (17) disposed on the pot body (1) or on the upper cover (2) and capable of magnetically attracting the first attraction piece (86) such that the shield (8) is attached to the pot body (1) or to the upper cover (2) through attraction between the first attraction piece (86) and the second attraction piece (17); or
the mounting structure is a sliding rail (87) disposed on the shield (8), the mounting mating structure is a sliding groove (18) disposed on the pot body (1) or on the upper cover (2) and matching with the sliding rail (87), and the sliding rail (87) is positioned in the sliding groove (18); or
the mounting structure is a sliding groove (18) disposed on the shield (8), the mounting mating structure is a sliding rail (87) disposed on the pot body (1) or on the upper cover (2) and capable of matching with the sliding groove (18), and the sliding rail (87) is positioned in the sliding groove (18); or
the mounting structure is a rotating shaft disposed on the shield (8), and the mounting mating structure is a shaft hole disposed in the pot body (1) or the upper cover (2) and capable of matching with the rotating shaft such that the shield (8) is rotatably connected to the pot body (1) or to the upper cover (2); or the mounting structure is a shaft hole disposed in the shield (8), and the mounting mating structure is a rotating shaft disposed on the pot body (1) or the upper cover (2) and capable of matching with the shaft hole such that the shield (8) is rotatably connected to the pot body (1) or to the upper cover (2).

10. The cooking appliance according to any one of claims 8 to 9, wherein the shield (8) is adhered to the pot body (1) or the upper cover (2); or the pot body (1) or the upper cover (2) is provided with a limiting hole with an open end, and the shield (8) covers the open end of the limiting hole and is limited within the limiting hole.

11. The cooking appliance according to any one of claims 8 to 10, wherein the shield (8) is provided with a mounting hole, and the second sensing device (6) is positioned in the mounting hole; or the second sensing device (6) is fixed to the shield (8) by means of insert-molding process; or the second sensing device (6) is bonded to the shield (8).

12. The cooking appliance according to any one of claims 1 to 11, wherein
the one of the pot body (1) and the upper cover (2) comprises a body and a housing sleeving on the body, the first sensing device (5) is positioned inside the housing, and the housing is provided with a gap(19) at a position corresponding to the first sensing device (5), wherein the housing is a metal housing.

13. The cooking appliance according to any one of claims 1 to 12, wherein
the one of the pot body (1) and the upper cover (2) is provided with a mounting recess (11) with an open end, and the first sensing device (5) and the second sensing device (6) are positioned in the mounting recess (11), wherein
the main control device (10) is preferably positioned in the mounting recess (11), the cooking appliance (100) preferably further comprises a control box (40), the control box (40) preferably covers the open end of the mounting recess (11), and the control box (40) is preferably provided with a wire outlet (401) for the first wire (7) to pass through.

14. The cooking appliance according to any one of claims 1 to 13, wherein
the pot body (1) or the upper cover (2) is provided with a mounting part, and the temperature sensor (4) is provided with a mounting mating part mating with the mounting part such that the temperature sensor (4) can be placed on the pot body (1) or the upper cover (2).

15. The cooking appliance according to claim 14, wherein
the mounting part is a snap-in groove (12) disposed on the pot body (1) or on the upper cover (2), and the temperature sensor (4) can snap into the snap-in groove (12); or the mounting part is a second hook disposed on the pot body (1) or on the upper cover (2), and the mounting mating part is a second hanging hole disposed on the temperature sensor (4) and matching with the second hook; or the mounting part is a second hanging hole disposed on the pot body (1) or the upper cover (2), and the mounting mating part is a second hook disposed on the temperature sensor (4) and matching with the second hanging hole.

## Patentansprüche

1. Kochgerät (100), umfassend einen Topfkörper (1), einen im Topfkörper (1) angeordneten Innentopf (3) und eine den Topfkörper (1) bedeckende obere Abdeckung (2),
wobei das Kochgerät ferner Folgendes umfasst:
eine Hauptsteuervorrichtung (10), die entweder an dem Topfkörper (1) oder der oberen Abdeckung (2) angeordnet ist,
**dadurch gekennzeichnet, dass**
das Kochgerät ferner eine Kommunikationsvorrichtung umfasst, die eine erste Erfassungsvorrichtung (5) und eine zweite Erfassungsvorrichtung (6) umfasst, die entsprechend angeordnet sind, wobei die erste Erfassungsvorrichtung (5) entweder an dem Topfkörper (1) oder der oberen Abdeckung (2) angeordnet ist und elektrisch mit der Hauptsteuervorrichtung (10) verbunden ist, wobei die erste Erfassungsvorrichtung (5) eine erste Spule (51) umfasst, wobei die zweite Erfassungsvorrichtung (6) am Topfkörper (1) oder an der oberen Abdeckung (2) angeordnet ist, wobei die zweite Erfassungsvorrichtung (6) eine zweite Spule (61) umfasst und die zweite Spule (61) dazu ausgebildet ist, mit der ersten Spule (51) zu koppeln; und
ein Temperatursensor (4), der über eine erste Leitung (7) elektrisch mit der zweiten Erfassungsvorrichtung (6) verbunden ist und in den Innentopf (3) eingesetzt werden kann.

2. Kochgerät gemäß Anspruch 1, wobei
die erste Spule (51) die zweite Spule (61) zumindest teilweise abdeckt, und ein Abstand zwischen der ersten Spule (51) und der zweiten Spule (61) kleiner oder gleich 15 mm ist.

3. Kochgerät gemäß Anspruch 1 oder 2, wobei
die erste Erfassungsvorrichtung (5) ferner eine erste magnetisch leitende Platte umfasst und die erste Spule (51) auf der ersten magnetisch leitenden Platte angeordnet ist; und / oder
die zweite Erfassungsvorrichtung (6) ferner eine zweite magnetisch leitende Platte umfasst, und die zweite Spule (61) auf der zweiten magnetisch leitenden Platte angeordnet ist.

4. Kochgerät gemäß einem der Ansprüche 1 bis 3, wobei die obere Abdeckung (2) mit einem Durchgangsloch (21) versehen ist, das der Temperatursensor (4) durchdringen kann, und die obere Abdeckung (2) mit einem begrenzenden Gegenstück versehen ist, wobei der Temperatursensor (4) mit einem Begrenzungsteil versehen ist, wobei der Begrenzungsteil mit dem begrenzenden Gegenstück zusammenpasst, um den Temperatursensor (4) innerhalb des Durchgangslochs (21) zu begrenzen.

5. Kochgerät gemäß einem der Ansprüche 1 bis 4, wobei der Temperatursensor (4) ein Verbindungsteil (41) und ein Testteil (42) umfasst, die miteinander verbunden sind, der Verbindungsteil (41) mit der ersten Leitung (7) verbunden ist, der Testteil (42) intern mit einem Temperaturerfassungsteil versehen ist, eine Querschnittsfläche des Verbindungsteils (41) größer als eine Querschnittsfläche des Testteils (42) ist, der Begrenzungsteil eine Begrenzungsstufe (43) ist, die an einer Verbindung des Verbindungsteils (41) mit dem Testteil (42) gebildet ist, eine Querschnittsfläche des Durchgangslochs (21) größer oder gleich der Querschnittsfläche des Testteils (42) und kleiner als die Querschnittsfläche des Verbindungsteils (41) ist, das begrenzende Gegenstück ein Teil auf der Oberseite der oberen Abdeckung (2) ist, nahe dem Durchgangsloch (21) und der Testteil (42) in das Durchgangsloch (21) eingeführt wird, und die Begrenzungsstufe (43) an der Oberseite der oberen Abdeckung (2) anliegt, oder der Begrenzungsteil ein Außengewinde ist, das am Temperatursensor (4) angeordnet ist, und das begrenzende Gegenstück ein Innengewinde ist, das an einer Innenwand des Durchgangslochs (21) angeordnet ist, so dass der Temperatursensor (4) und das Durchgangsloch (21) mit einem Gewinde verbunden sind; oder
der Begrenzungsteil eine erste Schnappverbindung ist, die am Temperatursensor (4) angeordnet ist, das begrenzende Gegenstück eine zweite Schnappverbindung ist, die an der oberen Abdeckung (2) angeordnet ist, und der Temperatursensor (4) in das Durchgangsloch (21) eingeführt wird, so dass die erste Schnappverbindung mit der zweiten Schnappverbindung zusammenpasst, um den Temperatursensor (4) auf der oberen Abdeckung (2) einzurasten.

6. Kochgerät gemäß einem der Ansprüche 1 bis 5, wobei
die Hauptsteuervorrichtung (10) und die erste Erfassungsvorrichtung (5) auf einer Leiterplatte des Kochgeräts (100) angeordnet sind; oder die Hauptsteuervorrichtung (10) über eine zweite Leitung (30) elektrisch mit der ersten Erfassungsvorrichtung (5) verbunden ist.

7. Kochgerät gemäß einem der Ansprüche 1 bis 6, wobei
die erste Erfassungsvorrichtung (5) innerhalb des Topfkörpers (1) oder der oberen Abdeckung (2) angeordnet ist, und die zweite Erfassungsvorrichtung (6) innerhalb oder außerhalb des Topfkörpers (1) oder der oberen Abdeckung (2) angeordnet ist.

8. Kochgerät gemäß einem der Ansprüche 1 bis 7, wobei
die zweite Erfassungsvorrichtung (6) mit einer Abschirmung (8) abgedeckt ist, und die zweite Erfassungsvorrichtung (6) über die Abschirmung (8) mit dem Topfkörper (1) oder der oberen Abdeckung (2) verbunden ist, wobei die Abschirmung (8) bevorzugt mit einer Montagestruktur versehen ist und der Topfkörper (1) oder die obere Abdeckung (2) mit einer Montage-Gegenstruktur versehen ist, wobei die Montagestruktur bevorzugt mit der Montage-Gegenstruktur zusammenpasst, um die Abschirmung (8) mit dem Topfkörper (1) oder der oberen Abdeckung (2) zu verbinden.

9. Kochgerät gemäß Anspruch 8, wobei
die Montagestruktur eine dritte Schnappverbindung ist, die auf der Abschirmung (8) angeordnet ist, und die Montage-Gegenstruktur eine vierte Schnappverbindung ist, die auf dem Topfkörper (1) oder auf der oberen Abdeckung (2) angeordnet ist und mit der dritten Schnappverbindung zusammenpasst, so dass sie die Abschirmung (8) auf dem Topfkörper (1) oder der oberen Abdeckung (2) einrastet; oder
die Montagestruktur ein erstes Schraubenloch (84) ist, das auf der Abschirmung (8) angeordnet ist, und die Montage-Gegenstruktur ein zweites Schraubenloch (14) ist, das auf dem Topfkörper (1) oder der oberen Abdeckung (2) angeordnet ist und mit dem ersten Schraubenloch (84) übereinstimmt, so dass die Abschirmung (8) mit dem Topfkörper (1) oder der oberen Abdeckung (2) durch Schrauben verbunden ist; oder
die Montagestruktur ein erster Haken (16) ist, der auf der Abschirmung (8) angeordnet ist, und die Montagestruktur ein erstes Aufhängeloch (85) ist, das am Topfkörper (1) oder an der oberen Abdeckung (2) angeordnet ist und mit dem ersten Haken (16) zusammenpasst; oder
die Montagestruktur ein erstes Aufhängeloch (85) ist, das auf der Abschirmung (8) angeordnet ist, und die Montage-Gegenstruktur ein erster Haken (16) ist, der am Topfkörper (1) oder an der oberen Abdeckung (2) angeordnet ist und mit dem ersten Aufhängeloch (85) zusammenpasst; oder
die Montagestruktur ein erstes Anziehungsstück (86) ist, das auf der Abschirmung (8) angeordnet ist, und die Montage-Gegenstruktur ein zweites Anziehungsstück (17) ist, das auf dem Topfkörper (1) oder der oberen Abdeckung (2) angeordnet ist und das erste Anziehungsstück (86) magnetisch anziehen kann, so dass die Abschirmung (8) am Topfkörper (1) oder der oberen Abdeckung (2) durch Anziehung zwischen dem ersten Anziehungsstück (86) und dem zweiten Anziehungsstück (17) angebracht ist; oder
die Montagestruktur eine Gleitschiene (87) ist, die auf der Abschirmung (8) angeordnet ist, die Montage-Gegenstruktur eine Gleitnut (18) ist, die auf dem Topfkörper (1) oder der oberen Abdeckung (2) angeordnet ist und mit der Gleitschiene (87) zusammenpasst, und die Gleitschiene (87) in der Gleitnut (18) positioniert ist; oder
die Montagestruktur eine Gleitnut (18) ist, die auf der Abschirmung (8) angeordnet ist, die Montage-Gegenstruktur eine Gleitschiene (87) ist, die auf dem Topfkörper (1) oder der oberen Abdeckung (2) angeordnet ist und mit der Gleitnut (18) zusammenpassen kann, und die Gleitschiene (87) in der Gleitnut (18) positioniert ist; oder
die Montagestruktur eine rotierende Welle ist, die auf der Abschirmung (8) angeordnet ist, und die Montage-Gegenstruktur ein Wellenloch ist, das in dem Topfkörper (1) oder der oberen Abdeckung (2) angeordnet ist und mit der rotierenden Welle zusammenpassen kann, so dass die Abschirmung (8) drehbar mit dem Topfkörper (1) oder der oberen Abdeckung (2) verbunden ist; oder die Montagestruktur ein Wellenloch ist, das in der Abschirmung (8) angeordnet ist, und die Montage-Gegenstruktur eine rotierende Welle ist, die auf dem Topfkörper (1) oder der oberen Abdeckung (2) angeordnet ist und mit dem Wellenloch so zusammenpassen kann, dass die Abschirmung (8) drehbar mit dem Topfkörper (1) oder der oberen Abdeckung (2) verbunden ist.

10. Kochgerät gemäß einem der Ansprüche 8 bis 9, wobei
die Abschirmung (8) am Topfkörper (1) oder der oberen Abdeckung (2) haftet; oder der Topfkörper (1) oder die obere Abdeckung (2) mit einem Begrenzungsloch mit einem offenen Ende versehen ist, und die Abschirmung (8) das offene Ende des Begrenzungslochs abdeckt und innerhalb des Begrenzungslochs begrenzt ist.

11. Kochgerät gemäß einem der Ansprüche 8 bis 10, wobei
die Abschirmung (8) mit einem Montageloch versehen ist und die zweite Erfassungsvorrichtung (6) in dem Montageloch positioniert ist; oder die zweite Erfassungsvorrichtung (6) mittels eines Einspritzgussprozesses an der Abschirmung (8) befestigt wird; oder die zweite Erfassungsvorrichtung (6) mit der Abschirmung (8) verbunden ist.

12. Kochgerät gemäß einem der Ansprüche 1 bis 11, wobei
entweder der Topfkörper (1) oder die obere Abdeckung (2) einen Körper und eine Gehäusehülse am Körper umfasst, die erste Erfassungsvorrichtung (5) innerhalb des Gehäuses positioniert ist und das Gehäuse mit einem Spalt (19) versehen ist, an einer Position, die der ersten Erfassungsvorrichtung (5) entspricht, wobei das Gehäuse ein Metallgehäuse ist.

13. Kochgerät gemäß einem der Ansprüche 1 bis 12, wobei
entweder der Topfkörper (1) oder die obere Abdeckung (2) mit einer Montagenische (11) mit offenem Ende versehen ist und die erste Erfassungsvorrichtung (5) und die zweite Erfassungsvorrichtung (6) in der Montagenische (11) positioniert sind, wobei
die Hauptsteuervorrichtung (10) bevorzugt in der Montagenische (11) positioniert ist, das Kochgerät (100) bevorzugt ferner einen Steuerungskasten (40) umfasst, der Steuerungskasten (40) bevorzugt das offene Ende der Montagenische (11) abdeckt und der Steuerungskasten (40) bevorzugt mit einem Leitungsauslass (401) versehen ist, damit die erste Leitung (7) hindurch verlaufen kann.

14. Kochgerät gemäß einem der Ansprüche 1 bis 13, wobei
der Topfkörper (1) oder die obere Abdeckung (2) mit einem Montageteil versehen ist, und der Temperatursensor (4) mit einem Montage-Gegenstück versehen ist, das mit dem Montageteil zusammenpasst, so dass der Temperatursensor (4) auf den Topfkörper (1) oder der oberen Abdeckung (2) gelegt werden kann.

15. Kochgerät gemäß Anspruch 14, wobei
das Montageteil eine Einrastnut (12) ist, die an dem Topfkörper (1) oder der oberen Abdeckung (2) angeordnet ist, und der Temperatursensor (4) in die Einrastnut (12) einrasten kann; oder das Montageteil ein zweiter Haken ist, der am Topfkörper (1) oder an der oberen Abdeckung (2) angeordnet ist, und das Montage-Gegenstück ein zweites Aufhängeloch ist, das am Temperatursensor (4) angeordnet ist und mit dem zweiten Haken zusammenpasst; oder das Montageteil ein zweites Aufhängeloch ist, das am Topfkörper (1) oder der oberen Abdeckung (2) angeordnet ist, und das Montage-Gegenstück ein zweiter Haken ist, der am Temperatursensor (4) angeordnet ist und mit dem zweiten Aufhängeloch zusammenpasst.

## Revendications

1. Appareil de cuisson (100) comprenant un corps de récipient (1), un récipient intérieur (3) disposé dans le corps de récipient (1) et un couvercle supérieur (2) recouvrant le corps de récipient (1),
l'appareil de cuisson comprenant en outre :
un dispositif de commande principal (10) disposé sur l'un parmi le corps de récipient (1) et le couvercle supérieur (2),
**caractérisé en ce que**
l'appareil de cuisson comprend en outre un dispositif de communication comprenant un premier dispositif de détection (5) et un deuxième dispositif de détection (6) disposés de façon correspondante, le premier dispositif de détection (5) étant disposé sur l'un parmi le corps de récipient (1) et le couvercle supérieur (2) et relié électriquement au dispositif de commande principal (10), le premier dispositif de détection (5) comprenant une première bobine (51), le deuxième dispositif de détection (6) étant disposé sur le corps de récipient (1) ou sur le couvercle supérieur (2), le deuxième dispositif de détection (6) comprenant une deuxième bobine (61), et la deuxième bobine (61) étant capable d'accoupler à la première bobine (51) ; et
un capteur de température (4) électriquement relié au deuxième dispositif de détection (6) par le biais d'un premier fil (7) et apte à être placé dans le récipient intérieur (3).

2. Appareil de cuisson selon la revendication 1, dans lequel
la première bobine (51) recouvre au moins partiellement la deuxième bobine (61), et une distance entre la première bobine (51) et la deuxième bobine (61) est inférieure ou égale à 15 mm.

3. Appareil de cuisson selon la revendication 1 ou 2, dans lequel
le premier dispositif de détection (5) comprend en outre une première plaque conductrice magnétique, et la première bobine (51) est disposée sur la première plaque conductrice magnétique ; et/ou
le deuxième dispositif de détection (6) comprend en outre une deuxième plaque conductrice magnétique, et la deuxième bobine (61) est disposée sur la deuxième plaque conductrice magnétique.

4. Appareil de cuisson selon l'une quelconque des revendications 1 à 3, dans lequel
le couvercle supérieur (2) est doté d'un trou de passage (21) pour le passage du capteur de température (4) à travers celui-ci, et le couvercle supérieur (2) est doté d'une partie de limitation complémentaire, le capteur de température (4) est doté d'une partie de limitation, la partie de limitation s'accouple avec la partie de limitation complémentaire pour limiter le capteur de température (4) dans le trou de passage (21).

5. Appareil de cuisson selon l'une quelconque des revendications 1 à 4, dans lequel
le capteur de température (4) comprend une partie de raccordement (41) et une partie de sonde (42) reliées l'une à l'autre, la partie de raccordement (41) est reliée au premier fil (7), la partie de sonde (42) est dotée intérieurement d'une partie de détection de température, une aire de section transversale de la partie de raccordement (41) est supérieure à une aire de section transversale de la partie de sonde (42), la partie de limitation est un gradin de limitation (43) formé au niveau d'un joint entre la partie de raccordement (41) et la partie de sonde (42), une aire de section transversale du trou de passage (21) est supérieure ou égale à l'aire de section transversale de la partie de sonde (42) et inférieure à l'aire de section transversale de la partie de raccordement (41), la partie de limitation complémentaire est une partie de la surface supérieure du couvercle supérieur (2), à proximité du trou de passage (21), et la partie de sonde (42) est insérée dans le trou de passage (21), et le gradin de limitation (43) bute contre la surface supérieure du couvercle supérieur (2) ; ou
la partie de limitation est un filetage externe disposé sur le capteur de température (4), et la partie de limitation complémentaire est un filetage interne disposé sur une paroi intérieure du trou de passage (21), de sorte que le capteur de température (4) et le trou de passage (21) sont reliés par filetage ; ou
la partie de limitation est un premier joint à encliquetage disposé sur le capteur de température (4), la partie de limitation complémentaire est un deuxième joint à encliquetage disposé sur le couvercle supérieur (2), et le capteur de température (4) est inséré dans le trou de passage (21) de telle façon que le premier joint à encliquetage s'accouple avec le deuxième joint à encliquetage pour encliqueter le capteur de température (4) sur le couvercle supérieur (2).

6. Appareil de cuisson selon l'une quelconque des revendications 1 à 5, dans lequel
le dispositif de commande principal (10) et le premier dispositif de détection (5) sont disposés sur une carte de circuit de l'appareil de cuisson (100) ; ou le dispositif de commande principal (10) est électriquement relié au premier dispositif de détection (5) par le biais d'un deuxième fil (30).

7. Appareil de cuisson selon l'une quelconque des revendications 1 à 6, dans lequel
le premier dispositif de détection (5) est disposé à l'intérieur de l'un parmi le corps de récipient (1) et le couvercle supérieur (2), et le deuxième dispositif de détection (6) est disposé à l'intérieur ou à l'extérieur du corps de récipient (1) ou du couvercle supérieur (2).

8. Appareil de cuisson selon l'une quelconque des revendications 1 à 7, dans lequel
le deuxième dispositif de détection (6) est recouvert d'une protection (8), et le deuxième dispositif de détection (6) est relié au corps de récipient (1) ou au couvercle supérieur (2) par le biais de la protection (8), dans lequel
la protection (8) est de préférence dotée d'une structure de montage, et le corps de récipient (1) ou le couvercle supérieur (2) est de préférence doté d'une structure de montage complémentaire, la structure de montage s'accouple de préférence avec la structure de montage complémentaire pour relier la protection (8) au corps de récipient (1) ou au couvercle supérieur (2).

9. Appareil de cuisson selon la revendication 8, dans lequel
la structure de montage est un troisième joint à encliquetage disposé sur la protection (8), et la structure de montage complémentaire est un quatrième joint à encliquetage disposé sur le corps de récipient (1) ou sur le couvercle supérieur (2) et correspondant au troisième joint à encliquetage de manière à encliqueter la protection (8) sur le corps de récipient (1) ou sur le couvercle supérieur (2) ; ou
la structure de montage est un premiertrou de vis (84) disposé dans la protection (8), et la structure de montage complémentaire est un deuxième trou de vis (14) disposé sur le corps de récipient (1) ou le couvercle supérieur (2) et correspondant au premier trou de vis (84) de manière à relier la protection (8) au corps de récipient (1) ou au couvercle supérieur (2) par des vis ; ou
la structure de montage est un premier crochet (16) disposé sur la protection (8), et la structure de montage complémentaire est un premier trou d'accrochage (85) disposé sur le corps de récipient (1) ou sur le couvercle supérieur (2) et s'appariant avec le premier crochet (16) ; ou
la structure de montage est un premier trou d'accrochage (85) disposé sur la protection (8), et la structure de montage complémentaire est un premier crochet (16) disposé sur le corps de récipient (1) ou sur le couvercle supérieur (2) et s'appariant avec le premier trou d'accrochage (85) ; ou
la structure de montage est une première pièce d'attraction (86) disposée sur la protection (8), et la structure de montage complémentaire est une deuxième pièce d'attraction (17) disposée sur le corps de récipient (1) ou sur le couvercle supérieur (2) et capable d'attirer magnétiquement la première pièce d'attraction (86), de telle façon que la protection (8) est reliée au corps de récipient (1) ou au couvercle supérieur (2) par attraction entre la première pièce d'attraction (86) et la deuxième pièce d'attraction (17) ; ou
la structure de montage est un rail de coulissement (87) disposé sur la protection (8), la structure de montage complémentaire est une rainure de coulissement (18) disposée sur le corps de récipient (1) ou sur le couvercle supérieur (2) et s'apparie au rail de coulissement (87), et le rail de coulissement (87) est positionné dans la rainure de coulissement (18) ; ou
la structure de montage est une rainure de coulissement (18) disposée sur la protection (8), la structure de montage complémentaire est un rail de coulissement (87) disposé sur le corps de récipient (1) ou sur le couvercle supérieur (2) et capable de s'apparier à la rainure de coulissement (18), et le rail de coulissement (87) est positionné dans la rainure de coulissement (18) ; ou
la structure de montage est un arbre rotatif disposé sur la protection (8), et la structure de montage complémentaire est un trou d'arbre disposé dans le corps de récipient (1) ou le couvercle supérieur (2) et capable de s'apparier à l'arbre rotatif, de manière à relier la protection (8) de façon rotative au corps de récipient (1) ou au couvercle supérieur (2) ; ou la structure de montage est un trou d'arbre disposé dans la protection (8), et la structure de montage complémentaire est un arbre rotatif disposé sur le corps de récipient (1) ou le couvercle supérieur (2) et capable de s'apparier au trou d'arbre, de manière à relier la protection (8) de façon rotative au corps de récipient (1) ou au couvercle supérieur (2).

10. Appareil de cuisson selon l'une quelconque des revendications 8 à 9, dans lequel
la protection (8) est soudée au corps de récipient (1) ou au couvercle supérieur (2) ; ou le corps de récipient (1) ou le couvercle supérieur (2) est doté d'un trou de limitation avec une extrémité ouverte, et la protection (8) recouvre l'extrémité ouverte du trou de limitation tout en étant limitée à l'intérieur du trou de limitation.

11. Appareil de cuisson selon l'une quelconque des revendications 8 à 10, dans lequel
la protection (8) est dotée d'un trou de montage, et le deuxième dispositif de détection (6) est positionné dans le trou de montage ; ou le deuxième dispositif de détection (6) est fixé à la protection (8) à l'aide d'un procédé de moulage par insertion ; ou le deuxième dispositif de détection (6) est collé à la protection (8).

12. Appareil de cuisson selon l'une quelconque des revendications 1 à 11, dans lequel
l'un parmi le corps de récipient (1) et le couvercle supérieur (2) comprend un corps et un boîtier encerclant le corps, le premier dispositif de détection (5) est positionné à l'intérieur du boîtier, et le boîtier comporte un espace (19) à une position correspondant au premier dispositif de détection (5), le boîtier étant un boîtier métallique.

13. Appareil de cuisson selon l'une quelconque des revendications 1 à 12, dans lequel
l'un parmi le corps de récipient (1) et le couvercle supérieur (2) est doté d'un évidement de montage (11) avec une extrémité ouverte, et le premier dispositif de détection (5) et le deuxième dispositif de détection (6) sont positionnés dans l'évidement de montage (11), dans lequel
le dispositif de commande principal (10) est de préférence positionné dans l'évidement de montage (11), l'appareil de cuisson (100) comprend de préférence en outre un coffret de commande (40), le coffret de commande (40) recouvre de préférence l'extrémité ouverte de l'évidement de montage (11), et le coffret de commande (40) est de préférence doté d'une sortie de fil (401) pour le passage du premier fil (7) à travers celui-ci.

14. Appareil de cuisson selon l'une quelconque des revendications 1 à 13, dans lequel
le corps de récipient (1) ou le couvercle supérieur (2) est doté d'une partie de montage, et le capteur de température (4) est doté d'une partie de montage complémentaire s'accouplant avec la partie de montage de manière à pouvoir placer le capteur de température (4) sur le corps de récipient (1) ou le couvercle supérieur (2).

15. Appareil de cuisson selon la revendication 14, dans lequel
la partie de montage est une rainure d'encliquetage (12) disposée sur le corps de récipient (1) ou sur le couvercle supérieur (2), et le capteur de température (4) peut s'encliqueter dans la rainure d'encliquetage (12) ; ou la partie de montage est un deuxième crochet disposé sur le corps de récipient (1) ou sur le couvercle supérieur (2), et la partie de montage complémentaire est un deuxième trou d'accrochage disposé dans le capteur de température (4) et d'appariant au deuxième crochet ; ou la partie de montage est un deuxième trou d'accrochage disposé dans le corps de récipient (1) ou le couvercle supérieur (2), et la partie de montage complémentaire est un deuxième crochet disposé sur le capteur de température (4) et s'appariant au deuxième trou d'accrochage.
